# EUROPEAN PATENT APPLICATION

(11) **EP 4 456 192 A1**
(43) Date of publication of application: **30.10.2024**
(21) Application number: 22911372.5
(22) Date of filing: 22.12.2022
(51) Int. Cl.: H01M 4/505, C01G 45/00

(54) **POSITIVE ELECTRODE ACTIVE MATERIAL FOR SECONDARY BATTERIES, AND SECONDARY BATTERY**

(30) Priority: 24.12.2021 JP 2021211607
(71) Applicant: Panasonic Intellectual Property Management Co., Ltd., Kadoma-shi, Osaka 571-0057 (JP)
(72) Inventor: ZHANG, Jin, Kadoma-shi, Osaka 571-0057 (JP); IKEUCHI, Issei, Kadoma-shi, Osaka 571-0057 (JP); HIBINO, Mitsuhiro, Kadoma-shi, Osaka 571-0057 (JP); NAKURA, Kensuke, Kadoma-shi, Osaka 571-0057 (JP)
(74) Representative: Novagraaf International SA
(86) International application number: PCT/JP2022/047462
(87) International publication number: WO 2023/120670

(57) **Abstract**

A positive electrode active material for a secondary battery contains a lithium metal composite oxide having a crystal structure based on a rock salt structure belonging to the space group Fm-3m. The lithium metal composite oxide contains at least one element A¹ selected from the group consisting of Fe, Ca, Cr, Na, Al, Si, Mg, Cu, Zn, Pb, Sb, and W. The content of the element A¹ in the lithium metal composite oxide is 10 ppm by mass or more and 1000 ppm by mass or less with respect to the total amount of the lithium metal composite oxide. A lattice constant a, which indicates a length in an a-axis direction of a crystal lattice of the lithium metal composite oxide is 4.09 Å or more and 4.16 Å or less.

## Description

### [Technical Field]

The present disclosure relates to a positive electrode active material for a secondary battery, and a secondary battery.

### [Background Art]

Secondary batteries, in particular, lithium ion secondary batteries, have high output power and high energy density, and are thus expected to be used as small consumer uses, power storage devices, and power sources for electric vehicles. Composite oxides of lithium and a transition metal (e.g., cobalt) are used as positive electrode active materials of lithium ion secondary batteries. The capacity of a lithium ion secondary battery can be increased by replacing some of cobalt atoms with nickel atoms.

On the other hand, in recent years, in response to demand for high energy density, Li-rich lithium metal composite oxides based on Li₁₊ₓMn₁₋ₓO₂ having a rock salt structure have been gaining attention.

PTL 1 discloses a positive electrode active material containing a lithium transition metal composite oxide having a crystal structure belonging to the space group Fm-3m and represented by a composition formula Li₁₊ₓNb_{y}Me_{z}AₚO₂ (Me is a transition metal including Fe and/or Mn, 0<x<1, 0<y<0.5, 0.25≤z<1, Ais an element other than Nb and Me, 0≤p≤0.2, note that composite oxides satisfying Li₁₊ₚFe_{1-q}Nb_{q}O₂, 0.15<p≤0.3, and 0<q≤0.3 are excluded).

### [Citation List]

### [Patent Literature]

PTL 1: Japanese Patent No. 6197029

### [Summary of Invention]

### [Technical Problem]

In PTL 1, capacity can be increased by controlling a composition (i.e., addition of Nb). However, the capacity improvement effect is insufficient, and there is still room for improvement.

### [Solution to Problem]

In view of the above, one aspect of the present disclosure relates to a positive electrode active material for a secondary battery, the positive electrode active material containing a lithium metal composite oxide having a crystal structure based on a rock salt structure belonging to the space group Fm-3m, in which the lithium metal composite oxide contains at least one elementA¹ selected from the group consisting of Fe, Ca, Cr, Na, Al, Si, Mg, Cu, Zn, Pb, Sb, and W, the content of the elementA¹ in the lithium metal composite oxide is 10 ppm by mass or more and 1000 ppm by mass or less with respect to a total amount of the lithium metal composite oxide, and a lattice constant a that indicates a length in an a-axis direction of a crystal lattice of the lithium metal composite oxide is 4.09 Å or more and 4.16 Å or less.

Another aspect of the present disclosure relates to a secondary battery including: a positive electrode; negative electrode; and an electrolyte, in which the positive electrode contains the above-described positive electrode active material for a secondary battery.

### [Advantageous Effects of Invention]

According to the present disclosure, it is possible to realize a secondary battery with high energy density.

While novel features of the present invention are set forth particularly in the appended claims, the present invention, both as to organization and content, will be better understood and appreciated, along with other objects and features thereof, from the following detailed description taken in conjunction with the drawings.

### [Brief Description of Drawings]

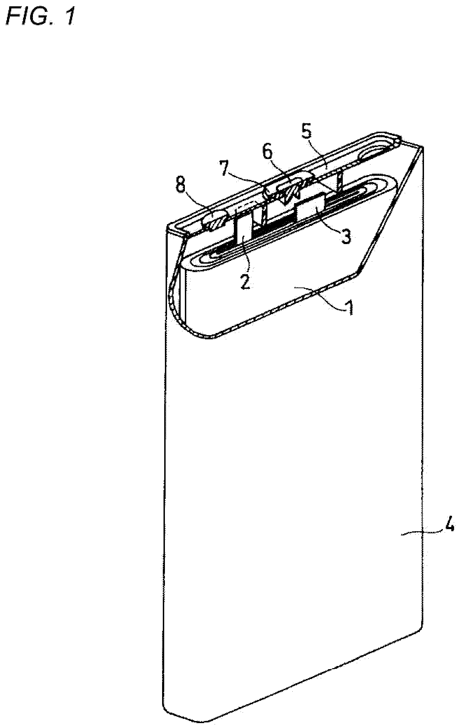

[FIG. 1] A partially cutaway schematic perspective view of a secondary battery according to an embodiment of the present disclosure.

### [Description of Embodiments]

Although an embodiment according to the present disclosure will be described below using an example, the present disclosure is not limited to an example described below. Although specific numerical values and materials may be mentioned as examples in the following description, other numerical values and other materials may be used as long as effects of the present disclosure can be obtained. The term "range of numerical value Ato numerical value B" used in this specification includes the numerical value A and the numerical value B, and can be read as "range of numerical value A or more and numerical value B or less". In the following description, when lower limits and upper limits of numerical values regarding specific physical properties, conditions, or the like are given as examples, any of the above-mentioned lower limits and any of the above-mentioned upper limits can be combined, as long as the lower limit is not greater than or equal to the upper limit. When a plurality of materials are given as examples, one type of material may be selected therefrom and used alone, or they may be used in combination of two or more.

A positive electrode active material for a secondary battery according to an embodiment of the present disclosure contains a lithium metal composite oxide having a crystal structure based on a rock salt structure belonging to the space group Fm-3m. That is, this lithium metal composite oxide has a crystal structure similar to a rock salt structure belonging to the space group Fm-3m. The lithium metal composite oxide contains at least one element A¹ selected from the group consisting of Fe, Ca, Cr, Na, Al, Si, Mg, Cu, Zn, Pb, Sb, and W.

The content of the element A¹ in the lithium metal composite oxide is 10 ppm by mass or more and 1000 ppm by mass or less with respect to the total amount of the lithium metal composite oxide. The content of the element A¹ also refers to the total content of Fe, Ca, Cr, Na, Al, Si, Mg, Cu, Zn, Pb, Sb, and W in the lithium metal composite oxide. A lattice constant a, which indicates a length in the a-axis direction of the crystal lattice of the lithium metal composite oxide, is 4.09 Å or more and 4.16 Å or less.

Because the lithium metal composite oxide contains a trace amount of the element A¹ in the above range, capacity is increased. Although the reason for this is not clear, it is conceivable that one reason is that, because a dielectric layer made of an oxide of the element A¹ is formed on at least a portion of the surface of the positive electrode active material, the electron orbital energy on the surface of the active material changes due to a change in an electric field distribution, and electron tunneling (charge transfer reaction) accompanying movement of lithium ions between the electrolyte and the active material is facilitated. Note that, in this specification, the wording "a trace amount of the element A¹" means that the content of the element A¹ in the lithium metal composite oxide is 1000 ppm by mass or less.

When the lithium metal composite oxide contains a trace amount of the element A¹ and has a lattice constant a of 4.09 Å or more and 4.16 Å or less, a significant capacity improvement effect can be obtained. Although a detailed reason for this is unknown, it is inferred that this is because, when the lattice constant a is within the above range, the crystal structure is easily stabilized, and when a composite oxide having a stable crystal structure contains a trace amount of the element A¹, the element A¹ tends to facilitate electron tunneling (charge transfer reaction) accompanying the movement of lithium ions between the electrolyte and the active material. When the lattice constant a is outside the above range, the effect of increasing capacity by adding a trace amount of the element A¹ may be reduced. Although a detailed reason for this is unknown, it is inferred that, when the lattice constant a is outside the above range, the influence of destabilization of the crystal structure increases.

The content of the element A¹ may be 50 ppm by mass or more and 750 ppm by mass or less (or 500 ppm by mass or less). The above lattice constant a may be 4.10 Å or more and 4.15 Å or less.

The lithium metal composite oxide may have a crystal structure based on a rock salt structure, such as NaCl, in which an oxygen atom is arranged at an anion site and a Li atom and metal atoms (including the element A¹) other than Li are irregularly arranged at cation sites.

The crystal structure of the lithium metal composite oxide is identified from an X-ray diffraction pattern measured using a powder X-ray diffraction device (e.g., a later-described X-ray diffraction device manufactured by Rigaku Corporation).

The lattice constant a, which indicates the length in the a-axis direction of the crystal lattice of the lithium metal composite oxide, is determined using a desktop X-ray diffraction device "MiniFlex" and integrated X-ray powder diffraction software "PDXI," manufactured by Rigaku Corporation. Note that the X-ray source is CuKα rays and the 2θ measurement range is 10° to 100° in the X-ray diffraction measurement using the X-ray diffraction device.

Note that a number in parenthesis is attached after the lattice constant a determined using the integrated X-ray powder diffraction software "PDXI,", and this number indicates error to the third decimal place. For example, 4.115(2) Å means that the lattice constant a is 4.113 Å or more and 4.117 Å or less. In the present disclosure, when the lattice constant a is 4.09 Å or more and 4.16 Å or less, the lattice constant a is in a range of 4.09Å or more and 4.16 Å or less in the above error range.

The lithium metal composite oxide contains lithium and a first metal element other than lithium. The first metal element includes a trace amount of the element A¹. The first metal element may include, as a main component, a transition metal element other than the transition metal element included in the element A¹. The first metal element preferably includes Mn as a main component. Note that the "main component" in this specification refers to a component (element) having the largest mole ratio in the first metal element. That is, the lithium metal composite oxide may be based on a composite oxide of Li and Mn. Examples of such a composite oxide of Li and Mn include Li₁₊ₓMn₁₋ₓO₂.

From the viewpoint of increasing energy density, the lithium metal composite oxide is preferably lithium-rich. Note that "lithium-rich" means that the mole ratio of lithium to the first metal element other than the trace amount of element A¹ in the lithium metal composite oxide is larger than 1.

The mole ratio of lithium to the first metal element other than a trace amount of element A¹ in the lithium metal composite oxide is, for example, 1.1 or more and 2.0 or less.

The lithium metal composite oxide preferably contains fluorine (F). Some of oxygen atoms are preferably replaced by fluorine atoms in the lithium metal composite oxide. Oxygen atoms at anion sites may be replaced by fluorine atoms in the crystal structure. In this case, the average discharge potential increases, and thus high capacity can be easily obtained. Also, when the lithium metal composite oxide is lithium-rich, the lithium-rich state is stabilized, and high capacity is easily obtained.

Examples of the lithium metal composite oxide include lithium metal composite oxides represented by composition formula LiₓMn_{y}M_{z}O₂₋ₚFₚ. In the formula, M is at least one metal element other than Li and Mn, includes at least element A¹, and 1.95≤x+y+z≤2, 1<x≤1.35, 0.4≤y≤0.9, 0<z≤0.2, and 0.2≤p≤0.7 are satisfied.

The crystal structure based on a rock salt structure belonging to the space group Fm-3m usually is a structure in which lithium atoms and metal atoms other than lithium are irregularly arranged at cation sites. In contrast, a composite oxide represented by the above composition formula has a crystal structure based on a rock salt structure belonging to the space group Fm-3m, but the lattice constant a is likely to be slightly smaller than a value predicted from the composition formula. Thus, the composite oxide may have a structure in which lithium atoms and metal atoms other than lithium are arranged regularly to some extent, which may affect the stability of the crystal structure.

In a composite oxide represented by the above composition formula, (x+y+z), which represents the total mole ratio of Li, Mn, and a metal element M, may be 1.97 or more and 2 or less, and may be 2. x, which represents the mole ratio of Li in the composite oxide represented by the above composition formula is preferably 1.1 or more and 1.35 or less, and more preferably 1.1 or more and 1.3 or less. y, which represents the mole ratio of Mn in the composite oxide represented by the above composition formula, may be 0.5 or more and 0.85 or less. In the composite oxide represented by the composition formula, the metal element M includes at least a trace amount of the element A¹, and thus z, which represents the mole ratio of the metal element M, is larger than 0. z, which represents the mole ratio of the metal element M, may be more than 0 and 0.15 or less. p, which represents the mole ratio of F, may be 0.2 or more and 0.6 or less.

In the composite oxide represented by the composition formula, the metal element M may include a trace amount of the element A¹ and at least one selected from the group consisting of Ni, Co, Sn, Nb, Mo, Bi, V, Y, Zr, K, Pt, Au, Ag, Ru, Ta, La, Ce, Pr, Sm, Eu, Dy, and Er. In particular, the metal element M preferably includes a trace amount of the element A¹ and at least one selected from the group consisting of Ni, Sn, Mo, and Ti.

The lithium metal composite oxide can be synthesized by, for example, mixing lithium fluoride (LiF), lithium manganese (LiMnO₂), and an oxide of the element A¹, in an inert gas atmosphere such as Ar, using a planetary ball mill. Li₂O and Mn₂O₃ may be used as raw materials. A mixer capable of applying a similar stirring shear force to powder may be used instead of a planetary ball mill, and powder may be heated during a mixing process. A composition and the like of the composite oxide may be adjusted to desired ranges by, for example, changing the mixing ratio of LiF and LiMnO₂, and mixing conditions (rotation speed, processing time, processing temperature, and the like).

The element A¹ contained in the lithium metal composite oxide may originate from a raw material used in the synthesis of the lithium metal composite oxide, or may originate from a material that forms a processing container in the mixing process. For example, Ca and Na may originate from a lithium raw material used in the synthesis of a lithium metal composite oxide. For example, Si and Al may originate from a material that forms a processing container during the mixing process.

A secondary battery according to an embodiment of the present disclosure includes a positive electrode, a negative electrode, and an electrolyte, in which the positive electrode contains the above-described positive electrode active material for a secondary battery.

Hereinafter, the secondary battery according to an embodiment of the present disclosure will be described in detail.

### [Positive Electrode]

The positive electrode includes, for example, a positive electrode current collector, and a positive electrode mixture layer supported on the surface of the positive electrode current collector. The positive electrode mixture layer can be formed by, for example, applying, to the surface of the positive electrode current collector, a positive electrode slurry in which a positive electrode mixture is dispersed in a dispersion medium, and drying the slurry. The dried coating film may be rolled as needed. The positive electrode mixture layer may be formed on one surface or both surfaces of the positive electrode current collector.

The positive electrode mixture contains a positive electrode active material as an essential component, and may contain a binding agent, a conductive agent, and the like as optional components. Known materials can be used as a binding agent and a conductive agent.

The positive electrode active material contains the lithium metal composite oxide. The composite oxide is, for example, secondary particles obtained through aggregation of primary particles. The particle size of primary particles is usually 0.05 µm to 1 µm. The average particle size of the composite oxide is, for example, 3 µm to 30 µm, and preferably 5 µm to 25 µm. Here, the average particle size of the composite oxide refers to the median diameter (D50) at which the cumulative frequency is 50% in a volume-based particle size distribution, and is measured using a laser diffraction particle size distribution measuring device.

Note that the content of elements that constitute the composite oxide can be measured using an inductively coupled plasma atomic emission spectroscopy (ICP-AES), an electron probe microanalyzer (EPMA), an energy dispersive X-ray analyzer (EDX), or the like.

The positive electrode active material may further contain other lithium metal composite oxides other than the above-described lithium metal composite oxide. Examples of the other lithium metal composite oxides include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMePO₄, and Li₂MePO₄F. Here, M is at least one selected from the group consisting of Na, Mg, Sc, Y, Mn, Fe, Co, Ni, Cu, Zn, Al, Cr, Pb, Sb, and B. Me includes at least a transition element (e.g., includes at least one selected from the group consisting of Mn, Fe, Co, and Ni). Here, 0≤a≤12, 0≤b≤0.9, and 2.0≤c≤2.3 hold true. Note that an a-value, which indicates the mole ratio of lithium, increases or decreases through charging and discharging.

A non-porous conductive substrate (a metal foil or the like), or a porous conductive substrate (a mesh body, a net body, a punched sheet, or the like) is used as the positive electrode current collector. Examples of materials of the positive electrode current collector include stainless steel, aluminum, aluminum alloys, and titanium.

### [Negative Electrode]

The negative electrode includes, for example, a negative electrode current collector, and a negative electrode mixture layer supported on the negative electrode current collector. The negative electrode mixture layer can be formed by, for example, applying, to the surface of the negative electrode current collector, a negative electrode slurry in which a negative electrode mixture is dispersed in a dispersion medium, and drying the slurry. The dried coating film may be rolled as needed. The negative electrode mixture layer may be formed on one surface or both surfaces of the negative electrode current collector. The negative electrode mixture layer may be a negative electrode active material layer. Also, a lithium metal foil or a lithium alloy foil may be attached to the negative electrode current collector.

The negative electrode mixture contains a negative electrode active material as an essential component, and may contain a binding agent, a conductive agent, and the like as optional components. Known materials can be used as a binding agent and a conductive agent.

The negative electrode active material includes a material that electrochemically absorbs and releases lithium ions, lithium metal, and/or a lithium alloy. It is possible to use a carbon material, an alloy-based material, or the like as a material that electrochemically absorbs and releases lithium ions. Examples of the carbon material include graphite, easily-graphitizable carbon (soft carbon), and hardly-graphitizable carbon (hard carbon). In particular, graphite that has excellent charge/discharge stability and low irreversible capacity is preferable. Examples of the alloy-based material include materials that contains at least one metal that can form an alloy with lithium, such as silicon, tin, silicon alloys, tin alloys, and silicon compounds. Silicon oxide, tin oxide, and the like in which these materials are combined with oxygen may be used.

It is possible to use, as an alloy-based material containing silicon, for example, a lithium ion conductive phase and a silicon composite material in which silicon particles are dispersed in a lithium ion conductive phase. It is possible to use, as a lithium ion conductive phase, for example, a silicon oxide phase, a silicate phase, and/or a carbon phase. The main component (e.g., 95% by mass to 100% by mass) of the silicon oxide phase may be silicon dioxide. In particular, the composite material constituted by a silicate phase and silicon particles dispersed in the silicate phase is preferable because such a composite material has a high capacity and a low irreversible capacity.

The silicate phase may contain, for example, at least one selected from the group consisting of Group 1 elements and Group 2 elements in the long-period periodic table. Lithium (Li), potassium (K), sodium (Na), magnesium (Mg), calcium (Ca), strontium (Sr), barium (Ba), and the like may be used as Group 1 elements in the long-period periodic table and Group 2 elements in the long-period periodic table, for example. In particular, a lithium silicate phase is preferable because it has a low irreversible capacity and high initial charge/discharge efficiency.

The lithium silicate phase needs only be an oxide phase containing lithium (Li), silicon (Si), and oxygen (O), and may also contain other elements. The lithium silicate phase may have a composition represented by the formula: Li_{2z}SiO_{2+z} (0<z<2). z preferably satisfies the relationship 0<z<1, and z=1/2 is more preferable.

The carbon phase may be constituted of, for example, amorphous carbon with low crystallinity. Amorphous carbon may be, for example, hard carbon, soft carbon, or other carbons.

The shape of the negative electrode current collector can be selected from shapes similar to that of the positive electrode current collector. Examples of materials of the negative electrode current collector include stainless steel, nickel, nickel alloys, copper, and copper alloys.

### [Electrolyte]

An electrolyte contains a solvent and a solute dissolved in the solvent. The solute is an electrolyte salt that ionically dissociates in the electrolyte. The solute may contain, for example, a lithium salt. Components of the electrolyte other than the solvent and the solute are additives. The electrolyte may contain various additives. The electrolyte is usually used in a liquid state, but the electrolyte may be in a state in which fluidity thereof is restricted using a gelling agent or the like.

An aqueous solvent or a non-aqueous solvent is used as the solvent. For example, a cyclic carbonic acid ester, a chain carbonic acid ester, a cyclic carboxylic acid ester, a chain carboxylic acid ester, or the like is used as the non-aqueous solvent. Examples of the cyclic carbonic acid ester include propylene carbonate (PC), ethylene carbonate (EC), and vinylene carbonate (VC). Examples of the chain carbonic acid ester include diethyl carbonate (DEC), ethyl methyl carbonate (EMC), and dimethyl carbonate (DMC). Also, examples of the cyclic carboxylic acid ester include γ-butyrolactone (GBL) and γ-valerolactone (GVL). Examples of the chain carboxylic acid ester include methyl acetate, ethyl acetate, propyl acetate, methyl propionate (MP), and ethyl propionate (EP). These non-aqueous solvents may be used alone or in combination of two or more.

Examples of other non-aqueous solvents include cyclic ethers, chain ethers, nitriles such as acetonitrile, and amides such as dimethylformamide.

Examples of the cyclic ether include 1,3-dioxolane, 4-methyl-1,3-dioxolane, tetrahydrofuran, 2-methylterahydrofuran, propylene oxide, 1,2-butylene oxide, 1,3-dioxane, 1,4-dioxane, 1,3,5-trioxane, furan, 2-methylfuran, 1,8-cineole, and crown ether.

Examples of the chain ether include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

These solvents may be fluorinated solvents in which some of hydrogen atoms are replaced with fluorine atoms. Fluoroethylene carbonate (FEC) may be used as a fluorinated solvent.

It is possible to use, as a lithium salt, for example, lithium salts of chlorine-containing acids (LiClO₄, LiAlCl₄, LiB₁₀Cl₁₀, and the like), lithium salts of fluorine-containing acids (LiPF₆, LiPF₂O₂, LiBF₄, LiSbF₆, LiAsF₆, LiCF₃SO₃, LiCF₃CO₂, and the like), lithium salts of fluorine-containing acid imides (LiN(FSO₂)₂, LiN(CF₃SO₂)₂, LiN(CF₃SO₂)(C₄F₉SO₂), LiN(C₂F₅SO₂)₂, and the like), lithium halides (LiCl, LiBr, LiI, and the like), and the like. These lithium salts may be used alone or in combination of two or more.

The concentration of a lithium salt in the electrolyte may be 1 mol/L or more and 2 mol/L or less, or 1 mol/L or more and 1.5 mol/L or less. An electrolyte having high ionic conductivity and appropriate viscosity can be obtained by controlling the lithium salt concentration within the above range. However, the lithium salt concentration is not limited to the above.

The electrolyte may contain other known additives. Examples of additives include 1,3-propanesultone, methyl benzene sulfonate, cyclohexylbenzene, biphenyl, diphenyl ether, and fluorobenzene.

### [Separator]

It is desired that a separator is interposed between the positive electrode and the negative electrode. The separator has high ion permeability, appropriate mechanical strength, and insulating properties. It is possible to use a microporous thin film, woven cloth, nonwoven cloth, or the like as the separator. It is preferable to use a polyolefin such as polypropylene or polyethylene as the material of the separator.

A secondary battery may include, for example, a rolled-up type electrode group in which a positive electrode and a negative electrode are rolled up with the separator interposed therebetween, or a stacked-type electrode group in which a positive electrode and a negative electrode are stacked with the separator interposed therebetween. The secondary battery may be, for example, cylindrical, rectangular, coin-shaped, button-shaped, laminated, or the like. In the present disclosure, there is no particular limitation on the type, shape, and the like of the secondary battery.

FIG. 1 is a partially cutaway schematic perspective view of a rectangular secondary battery according to an embodiment of the present disclosure.

The battery includes a rectangular battery case 4 having a bottom, and an electrode group 1 and a non-aqueous electrolyte (not shown) that are housed in the battery case 4. The electrode group 1 includes an elongated strip-shaped negative electrode, an elongated strip-shaped positive electrode, and a separator interposed therebetween. A negative electrode current collector of the negative electrode is electrically connected to a negative electrode terminal 6 provided on a sealing plate 5 via a negative electrode lead 3. The negative electrode terminal 6 is insulated from the sealing plate 5 by a resin gasket 7. A positive electrode current collector of the positive electrode is electrically connected to a back side of the sealing plate 5 via a positive electrode lead 2. That is, the positive electrode is electrically connected to the battery case 4, which also serves as a positive electrode terminal. A peripheral edge of the sealing plate 5 fits into an open end portion of the battery case 4, and the fitting portion is welded with a laser. The sealing plate 5 has an electrolyte injection hole, which is closed with a sealing plug 8 after injection.

Hereinafter, the present disclosure will be specifically described based on examples and comparative examples, but the present disclosure is not limited to the following examples.

### <Examples 1 and 2>

### [Production of Positive Electrode]

Lithium fluoride (LiF), lithium manganate (LiMnO₂), calcium oxide (CaO), sodium oxide (Na₂O), zinc oxide (ZnO), aluminum oxide (Al₂O₃), and iron (III) oxide (Fe₂O₃) were mixed at a predetermined mass ratio. The mixed powder was introduced into a planetary ball mill (Premium-Line P7 manufactured by Fritsch, the rotation speed: 600 rpm, the container: 45 mL, the ball: ø5-mm ball made of Zr), and treated in an Ar atmosphere at room temperature for 35 hours (35 cycles of 1 hour of operation followed by 10 minutes of rest), and thus a lithium metal composite oxide having a predetermined composition was obtained.

A positive electrode mixture slurry was prepared by mixing the obtained lithium metal composite oxide, acetylene black, and polyvinylidene fluoride at a solid content mass ratio of 7:2:1, and using N-methyl-2-pyrrolidone (NMP) as a dispersion medium. Then, a positive electrode was obtained by applying the positive electrode mixture slurry onto a positive electrode core constituted by an aluminum foil, drying and compressing the resulting coating film, and cutting the resulting electrode to a predetermined electrode size.

### [Preparation of Electrolyte]

A non-aqueous electrolyte was prepared by adding LiPF₆ as a lithium salt to a mixed solvent obtained by mixing ethylene carbonate (EC), ethyl methyl carbonate (EMC), and dimethyl carbonate (DMC) at a predetermined volume ratio.

### [Production of Test Cell]

A test cell was produced using the above positive electrode and a negative counter electrode constituted by a lithium metal foil. An electrode body was constructed by arranging the positive electrode and the negative counter electrode to face each other with a separator interposed therebetween, and the electrode body was housed in a coin-shaped exterior can. A coin-shaped secondary battery for testing was obtained by injecting the electrolyte into the exterior can and sealing the exterior can.

In Examples 1 and 2, lithium metal composite oxides X1 and X2 having different compositions were synthesized to produce a secondary battery A1 in which the lithium metal composite oxide X1 was used as a positive electrode active material, and a secondary battery A2 in which the lithium metal composite oxide X2 was used as a positive electrode active material. The secondary battery A1 corresponded to Example 1, and the secondary battery A2 corresponded to Example 2.

The compositions of the lithium metal composite oxides X1 and X2 were identified through inductively coupled plasma atomic emission spectroscopy (ICP-AES). As a result, the composition of the lithium metal composite oxide X1 was evaluated to be approximately Li_{1.16}Mn_{0.81}O_{1.7}F_{0.3}, and the lithium metal composite oxide X1 contained Ca in an amount of 40 ppm by mass, Na in an amount of 60 ppm by mass, Zn in an amount of 30 ppm by mass, Al in an amount of 30 ppm, and Fe in an amount of 20 ppm. Similarly, the composition of the lithium metal composite oxide X2 was evaluated to be approximately Li_{1.16}Mn_{0.81}O_{1.7}F_{0.3}, and the lithium metal composite oxide X2 contained Ca in an amount of 100 ppm by mass, Na in an amount of 100 ppm by mass, Zn in an amount of 100 ppm by mass, Al in an amount of 60 ppm, and Fe in an amount of 100 ppm.

### <Comparative Examples 1 to 7>

In the production of a positive electrode, lithium fluoride (LiF), lithium manganate (LiMnO₂), calcium oxide (CaO), sodium oxide (Na₂O), zinc oxide (ZnO), aluminum oxide (Al₂O₃), and iron (III) oxide (Fe₂O₃) were mixed at a predetermined mass ratio. In a manner similar to that in Example 1, the mixed powder was introduced into a planetary ball mill, and treated in an Ar atmosphere at room temperature, and thus a lithium metal composite oxide having a predetermined composition was obtained. A positive electrode was produced using the obtained lithium metal composite oxide in a manner similar to that in Example 1, and thus a secondary battery for testing was obtained.

In Comparative Examples 1 to 7, lithium metal composite oxides Y1 to Y7 having different compositions were synthesized, and the lithium metal composite oxides Y1 to Y7 were used as positive electrode active materials to produce secondary batteries B1 to B7, respectively. The secondary batteries B 1 to B7 respectively corresponded to Comparative Examples 1 to 7.

The compositions of the lithium metal composite oxides Y1 to Y7 were identified through inductively coupled plasma atomic emission spectroscopy (ICP-AES). As a result, the composition of the lithium metal composite oxide Y1 was evaluated to be approximately Li_{1.2}Mn_{0.7}Zn_{0.1}O_{1.8}F_{0.2}, and the lithium metal composite oxide Y1 contained Ca in an amount of 40 ppm by mass, Na in an amount of 60 ppm by mass, Zn in an amount of 76000 ppm by mass, Al in an amount of 40 ppm, and Fe in an amount of 30 ppm. Similarly, the composition of the lithium metal composite oxide Y2 was evaluated to be approximately Li_{1.28}Mn_{0.62}Al_{0.1}O_{1.7}F_{0.3}, and the lithium metal composite oxide Y2 contained Ca in an amount of 30 ppm by mass, Na in an amount of 30 ppm by mass, Zn in an amount of 40 ppm by mass, Al in an amount of 35000 ppm, and Fe in an amount of 40 ppm. Similarly, the composition of the lithium metal composite oxide Y3 was evaluated to be approximately Li_{1.24}Mn_{0.66}Fe_{0.1}O_{1.7}F_{0.3}, and the lithium metal composite oxide Y3 contained Ca in an amount of 60 ppm by mass, Na in an amount of 30 ppm by mass, Zn in an amount of 50 ppm by mass, Al in an amount of 60 ppm, and Fe in an amount of 67000 ppm.

Similarly, the composition of the lithium metal composite oxide Y4 was evaluated to be approximately Li_{1.3}Mn_{0.65}Zn_{0.05}O_{1.5}F_{0.5}, and the lithium metal composite oxide Y4 contained Ca in an amount of 30 ppm by mass, Na in an amount of 60 ppm by mass, Zn in an amount of 40100 ppm by mass, Al in an amount of 50 ppm, and Fe in an amount of 20 ppm. Similarly, the composition of the lithium metal composite oxide Y5 was evaluated to be approximately Li_{1.67}Mn_{0.33}O_{0.67}F_{1.33}, and the lithium metal composite oxide Y5 contained Ca in an amount of 50 ppm by mass, Na in an amount of 60 ppm by mass, Al in an amount of 50 ppm, and Fe in an amount of 100 ppm, and the Zn content was less than a detection limit. Similarly, the composition of the lithium metal composite oxide Y6 was evaluated to be approximately Li_{1.39}Mn_{0.61}O_{1.5}F_{0.5}, and the lithium metal composite oxide Y6 contained Ca in an amount of 40 ppm by mass, Na in an amount of 60 ppm by mass, Zn in an amount of 50 ppm by mass, Al in an amount of 50 ppm, and Fe in an amount of 100 ppm. Similarly, the composition of the lithium metal composite oxide Y7 was evaluated to be approximately Li_{1.3}Mn_{0.6}Al_{0.1}O_{1.9}F_{0.1}, and the lithium metal composite oxide Y7 contained Ca in an amount of 50 ppm by mass, Na in an amount of 100 ppm by mass, Zn in an amount of 30 ppm by mass, Al in an amount of 35050 ppm, and Fe in an amount of 30 ppm.

X-ray diffraction patterns of the lithium metal composite oxides X1, X2, and Y1 to Y7 were measured and analyzed using a powder X-ray diffraction device, and based on the number and positions of XRD peaks, it was confirmed that the composite oxides had a rock salt-based crystal structure belonging to the space group Fm-3m. Also, lattice constants a of the composite oxides determined using the above-mentioned method are shown in Table 1. Note that a numerical value in parentheses attached to the lattice constant a in Table 1 indicates error to the third decimal place.

### [Evaluation]

### (Initial Discharge Capacity)

A secondary battery was subjected to constant current charging in an environment at room temperature at a constant current of 0.05 C until the battery voltage reached 4.95 V Then, the constant current charging was stopped for 20 minutes, and constant current discharging was performed at a constant current of 0.2 C until the battery voltage reached 2.5 V, and then discharge capacity was measured. The discharge capacity per mass of the positive electrode active material (lithium metal composite oxide) was determined, and the determined discharge capacity was set as the initial discharge capacity C₀.

Table 1 shows the result of evaluating the initial discharge capacity C₀ together with the composition of the lithium metal composite oxide used as a positive electrode active material and the content of Ca, Na, Zn, Al, and Fe in each battery.

**[Table 1]**

| Battery | Positive Electrode Active Material (Lithium Metal Composite Oxide) | | | | | | | | Discharge Capacity (mAh/g) |
|---|---|---|---|---|---|---|---|---|---|
| | Composition | Element A¹ Content (ppm by mass) | | | | | | Lattice Constant a (Å) | |
| | | Ca | Na | Zn | Al | Fe | Total | | |
| A1 | Li_{1.16}Mn_{0.81}O_{1.7}F_{0.3} | 40 | 60 | 30 | 30 | 20 | 180 | 4.126(4) | 296.7 |
| A2 | Li_{1.16}Mn_{0.81}O_{1.7}F_{0.3} | 100 | 100 | 100 | 60 | 100 | 460 | 4.128(5) | 300.6 |
| B1 | Li_{1.2}Mn_{0.7}Zn_{0.1}O_{1.8}F_{0.2} | 40 | 60 | 76000 | 40 | 30 | 76170 | 4.135(3) | 265.9 |
| B2 | Li_{1.28}Mn_{0.62}Al_{0.1}O_{1.7}F_{0.3} | 30 | 30 | 40 | 35000 | 40 | 35140 | 4.143(6) | 265.3 |
| B3 | Li_{1.24}Mn_{0.66}Fe_{0.1}O_{1.7}F_{0.3} | 60 | 30 | 50 | 60 | 67000 | 67200 | 4.103(8) | 193.4 |
| B4 | Li_{1.3}Mn_{0.65}Zn_{0.05}O_{1.5}F_{0.5} | 30 | 60 | 40100 | 50 | 20 | 40260 | 4.134(2) | 235.1 |
| B5 | Li_{1.67}Mn_{0.33}O_{0.67}F_{1.33} | 50 | 60 | N.D. | 50 | 100 | 260 | 4.084(2) | 25 |
| B6 | Li_{1.39}Mn_{0.61}O_{1.5}F_{0.5} | 40 | 60 | 50 | 50 | 100 | 300 | 4.172(5) | 139.4 |
| B7 | Li_{1.3}Mn_{0.6}Al_{0.1}O_{1.9}F_{0.1} | 50 | 100 | 30 | 35050 | 30 | 35260 | 4.168(2) | 206.3 |

The discharge capacities of the batteries A1 and A2 of Examples 1 and 2 were significantly improved by using the lithium metal composite oxides containing a trace amount of the element A¹ in a range of 10 to 1000 ppm by mass and having a lattice constant a in a range of 4.09 Å to 4.16 Å.

The discharge capacities of the batteries B1 to B7 of Comparative Examples 1 to 7 decreased because the lattice constant a was outside the range of 4.09 to 4.16 Å, and/or the content of the element A¹ was outside the range of 10 to 1000 ppm by mass.

Comparison between the battery B6 and the battery B7 having a lattice constant a larger than 4.16 Å revealed that the discharge capacity of the battery B6 was not improved by reducing the amount of the element A¹ in the battery B6 to 1000 ppm by mass or less, compared to the battery B7 (B7→B6).

Comparison between the battery B2 and the battery B7 that contained the element A¹ in an amount larger than 1000 ppm by mass revealed that, by setting the lattice constant a within a range of 4.09 to 4.16 Å, the discharge capacity of the battery B2 was improved by approximately 28.6%, compared to the battery B7 (B7→B2). Note that the numerical value of approximately 28.6% was calculated by {(C_{B2}-C_{B7})/C_{B7}}×100 where the discharge capacity of the battery B2 was C_{B2}, and the discharge capacity of the battery B7 was C_{B7}.

Meanwhile, the discharge capacities of the batteries A1 and A2 were improved respectively by 43.8% and 45.7%, compared to the battery B7 (B7→A1, A2). Note that these numerical values are values determined in a manner similar to the above. Based on these results, it can be seen that a remarkable effect of improving discharge capacity can be obtained by setting the content of the element A¹ to 10 to 1000 ppm by mass and the lattice constant a to 4.09 to 4.16 Å.

### [Industrial Applicability]

The secondary battery according to the present disclosure is useful as a main power source for mobile communication devices, portable electronic devices, and the like.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: Electrode group, 2: Positive electrode lead, 3: Negative electrode lead, 4: Battery case, 5: Sealing plate, 6: Negative electrode terminal, 7: Gasket, 8: Sealing plug

## Claims

1. A positive electrode active material for a secondary battery, comprising
a lithium metal composite oxide having a crystal structure based on a rock salt structure belonging to the space group Fm-3m,
wherein the lithium metal composite oxide contains at least one element A¹ selected from the group consisting of Fe, Ca, Cr, Na, Al, Si, Mg, Cu, Zn, Pb, Sb, and W,
the content of the element A¹ in the lithium metal composite oxide is 10 ppm by mass or more and 1000 ppm by mass or less with respect to a total amount of the lithium metal composite oxide, and
a lattice constant a that indicates a length in an a-axis direction of a crystal lattice of the lithium metal composite oxide is 4.09 Å or more and 4.16 Å or less.

2. The positive electrode active material for a secondary battery according to claim 1,
wherein the lithium metal composite oxide contains fluorine.

3. The positive electrode active material for a secondary battery according to claim 1 or 2,
wherein the lithium metal composite oxide is represented by a composition formula LiₓMn_{y}M_{z}O₂₋ₚFₚ,
where M is at least one metal element other than Li and Mn, and includes at least the element A¹, and
1.95≤x+y+z≤2, 1<x≤1.35, 0.4≤y≤0.9, 0<z≤0.2, and 0.2≤p≤0.7 are satisfied.

4. A secondary battery comprising:
a positive electrode;
a negative electrode; and
an electrolyte,
wherein the positive electrode contains the positive electrode active material for a secondary battery according to any one of claims 1 to 3.
